# DEMANDE DE BREVET EUROPEEN

(11) **EP 1 470 867 A2**
(43) Date de publication de la demande: **27.10.2004**
(21) Numéro de dépôt: 04291044.8
(22) Date de dépôt: 22.04.2004
(51) Int. Cl.: B05B 7/24

(54) **Dispositif de pulvérisation d'un produit comportant un réservoir amovible.**

(30) Priorité: 24.04.2003 FR 0305034; 24.04.2003 FR 0305035
(71) Demandeur: L'OREAL, 75008 Paris (FR)
(72) Inventeur: Habatjou, Jacques, 59400 Cambrai (FR)
(74) Mandataire: Tanty, François

(57) **Abrégé**

La présente invention concerne un dispositif de pulvérisation comportant :
- un mécanisme de pulvérisation,
- un réservoir contenant un produit cosmétique à pulvériser, agencé de manière à pouvoir se fixer de façon amovible sur le dispositif de manière à ce que le produit puisse être sélectivement distribué au moyen du mécanisme de pulvérisation, ce réservoir comportant :
   - un passage de sortie du produit, et
   - un obturateur (25) pour obturer ce passage lorsque le réservoir n'est pas monté sur le dispositif,
le mécanisme et l'obturateur étant agencés de telle sorte que l'obturateur s'ouvre en réponse au montage du réservoir sur le dispositif, le réservoir comportant en outre au moins une première cloison et des premier et deuxième compartiments capables de contenir le produit, ces compartiments étant agencés pour alimenter le mécanisme de pulvérisation en produit et étant disposés de part et d'autre de cette première cloison.

## Description

La présente invention concerne les dispositifs pour la pulvérisation d'un produit, notamment cosmétique, par exemple un fond de teint liquide.

Il est connu d'appliquer un produit de maquillage sur la peau, au moyen d'un aérographe comportant un stylo pulvérisateur relié à une bouteille d'un gaz vecteur comprimé, ce stylo pulvérisateur comprenant d'une part une tuyère d'éjection du gaz vecteur et d'autre part une coupelle dans laquelle le produit à pulvériser est contenu, le produit étant progressivement aspiré hors de la coupelle grâce à une dépression créée au niveau d'un orifice de sortie d'un conduit relié à la coupelle. Cette dépression est créée par effet Venturi, par la vitesse du gaz vecteur circulant au niveau de l'orifice de sortie, en sortie de tuyère. Le produit peut également être entraîné hors de la coupelle *via* le conduit, lorsque l'orifice de sortie est disposé en amont relativement à la sortie de la tuyère.

La pulvérisation avec un aérographe permet notamment de rendre moins visible une frontière entre des zones de peau traitées et non traitées, de réaliser des fondus ou des dégradés.

La gestuelle de maquillage est également différente, puisque le produit qui est pulvérisé n'a pas à être étalé une fois déposé. L'application du produit est ainsi très hygiénique, puisqu'elle peut se faire sans les doigts et sans applicateur.

Un inconvénient des dispositifs connus est qu'il est relativement difficile de déposer juste la quantité de produit souhaitée.

On connaît par les brevets US 3 675 824 et US 4 714 084, ainsi que par les demandes de brevet français FR-A-1 280 048, FR-A-1 449 794 et FR-A-2 781 208 divers dispositifs de pulvérisation utilisant un gaz vecteur.

Dans la demande de brevet FR 1 449 794, le produit est contenu dans un bidon relativement gros qui sert d'organe de préhension. Un tel dispositif n'est pas très ergonomique et ne permet pas d'utiliser facilement un réservoir de faible contenance, amovible.

L'invention vise à perfectionner encore les dispositifs de pulvérisation afin de faciliter la réalisation d'un maquillage soigné.

Il existe un besoin pour bénéficier d'un dispositif de pulvérisation relativement peu encombrant et ergonomique, et qui permette l'obtention d'un maquillage soigné, le cas échéant en utilisant successivement des produits ayant des teintes différentes.

L'invention vise notamment à répondre à ce besoin.

Elle y parvient grâce à un dispositif de pulvérisation qui comporte :
- un mécanisme de pulvérisation,
- un réservoir contenant un produit à pulvériser, agencé de manière à pouvoir se fixer de façon amovible sur le dispositif de manière à ce que le produit puisse être sélectivement distribué au moyen du mécanisme de pulvérisation, ce réservoir comportant :
   - un passage de sortie du produit, et
   - un obturateur pour obturer ce passage lorsque le réservoir n'est pas monté sur le dispositif,
le mécanisme et l'obturateur étant agencés de telle sorte que l'obturateur s'ouvre en réponse au montage du réservoir sur le dispositif.

Grâce à l'invention, l'utilisateur peut aisément se maquiller avec plusieurs produits ayant des couleurs différentes, au moyen du même mécanisme de pulvérisation, en interchangeant si nécessaire les réservoirs contenant ces produits. Le risque de fuite de produit est limité du fait que dès l'enlèvement du réservoir, le passage de sortie du produit se ferme automatiquement.

Dans une mise en oeuvre particulière de l'invention, le réservoir comporte au moins une première cloison et des premier et deuxième compartiments capables de contenir le produit, ces compartiments étant agencés pour alimenter en produit le mécanisme de pulvérisation et étant disposés de part et d'autre de la première cloison.

Cela peut permettre par exemple de fixer le réservoir en partie supérieure du dispositif de pulvérisation tout en assurant une continuité de l'alimentation en produit durant le maquillage même en cas de changement de l'inclinaison du réservoir, du fait que la première cloison ralentit les mouvements du produit dans le réservoir. On obtient ainsi un dispositif susceptible d'être utilisé dans un grand nombre de positions rencontrées lors du maquillage du visage notamment.

Le terme « cloison » doit être compris avec un sens large et englobe notamment des parois pleines, creuses, ajourées, rigides, souples, poreuses, planes, cylindriques ou présentant d'autres formes encore, pouvant notamment être formées par la juxtaposition d'obstacles à l'écoulement du produit.

Le réservoir et le dispositif peuvent être agencés pour permettre la fixation du réservoir sur le dispositif à proximité de l'orifice de sortie du produit qui est pulvérisé, ce qui peut permettre, si cela est souhaitable, d'acheminer plus rapidement le produit vers l'orifice de sortie et de réduire le volume de produit qui demeure à l'intérieur du dispositif, hors du réservoir, entre deux utilisations.

Le passage précité, par lequel le produit s'écoule hors du réservoir peut notamment déboucher, à une extrémité, de part et d'autre de la première cloison, les premier et deuxième compartiments communiquant ensemble par ledit passage.

L'obturateur peut comporter un clapet à bille. Le mécanisme de pulvérisation peut alors comporter un relief agencé pour déplacer la bille d'une position d'obturation à une position ouvrant le passage, lorsque le réservoir est mis en place.

Le réservoir peut comporter au moins une deuxième cloison d'un côté de la première, associée au premier compartiment et délimitant dans celui-ci deux sous-compartiments communiquant l'un avec l'autre. Le réservoir peut aussi comporter au moins une troisième cloison associée au deuxième compartiment et délimitant dans celui-ci deux sous-compartiments, la première cloison précitée se situant entre les deuxième et troisième cloisons.

Le réservoir peut comporter une partie de base et une partie formant couvercle, rapportée sur la partie de base. Les deuxième et troisième cloisons peuvent alors être réalisées d'un seul tenant avec l'une au moins de la partie de base et de la partie formant couvercle.

Le réservoir peut présenter une forme générale allongée, d'axe longitudinal sensiblement parallèle à la direction selon laquelle s'effectue la pulvérisation.

Le passage du réservoir par lequel le produit est délivré au mécanisme peut être délimité au moins partiellement par un embout. Celui-ci peut être saillant. L'embout peut porter un joint torique d'étanchéité.

Le réservoir peut être au moins partiellement transparent, afin de permettre à l'utilisateur d'observer le niveau et la couleur du produit.

Le réservoir peut comporter en outre une partie de fixation agencée pour coopérer par complémentarités de formes avec le mécanisme de pulvérisation.

Le réservoir peut comporter également un micro-orifice débouchant à l'air libre.

Le mécanisme de pulvérisation peut comporter un logement pour recevoir une réserve de gaz vecteur, le produit étant pulvérisé grâce à une dépression créée par un écoulement de ce gaz vecteur. Ce dernier peut être stocké sous une forme liquéfiée dans un récipient pressurisé. Un capot mobile peut permettre de fermer l'accès au logement.

Le mécanisme de pulvérisation peut comporter un organe de commande agencé de manière à agir simultanément à la fois sur une valve de distribution de gaz vecteur et sur une valve de réglage du débit du produit pulvérisé.

Dans une réalisation particulière, la valve de réglage comporte un pointeau agencé pour coopérer avec un siège associé, de manière à ce que le débit de produit pulvérisé varie avec l'écartement entre le siège et le pointeau. Une telle valve de réglage permet à l'utilisateur de régler progressivement et précisément la quantité de produit pulvérisé.

L'organe de commande peut comporter un levier rotatif.

La valve de distribution peut être solidaire du récipient pressurisé, ce qui permet de bénéficier d'une économie d'échelle dans sa réalisation et notamment d'utiliser une valve de distribution conventionnelle, à déclenchement par basculement d'une tige de commande.

Le siège peut être situé sur une pièce de support d'au moins une buse de pulvérisation du produit. Cette pièce de support peut être en matière plastique. Elle peut être fixée de manière amovible sur le dispositif.

Dans une réalisation particulière, le dispositif comporte deux buses de sortie du gaz vecteur et une buse de sortie du produit à pulvériser. Chaque buse peut être métallique. Le dispositif peut notamment comporter deux orifices de sortie de gaz vecteur ayant des axes convergeant en éloignement du dispositif, et l'orifice de sortie du produit peut présenter un axe situé sensiblement dans le même plan que les axes des orifices de sortie de gaz vecteur. Cela permet notamment d'obtenir un spray relativement doux et de bonnes conditions d'application.

Toujours dans une réalisation particulière, le pointeau coulisse dans une direction sensiblement parallèle à la direction selon laquelle le produit est pulvérisé. Le dispositif peut comporter un ressort de rappel du pointeau dans une position de repos dans laquelle il s'applique contre le siège. Le cas échéant, l'organe de commande est dépourvu de ressort de rappel qui lui soit propre.

Le dispositif peut comporter un embout agencé pour s'engager sur une tige de commande de la valve de distribution et l'organe de commande peut être agencé pour pouvoir s'appliquer contre cet embout.

Un miroir peut être articulé sur le mécanisme de pulvérisation afin de permettre à l'utilisateur d'observer la zone sur laquelle le produit est pulvérisé.

Le mécanisme de pulvérisation peut présenter une forme générale allongée et l'organe de commande présenter une face d'appui pour l'utilisateur, disposée sur un côté longitudinal du dispositif. Ce dernier peut également présenter, en variante, la forme générale d'un pistolet.

L'organe de commande peut présenter une face d'appui pour l'utilisateur, disposée sur un côté d'une crosse, ce côté étant situé à l'opposé d'un orifice d'où sort le produit qui est pulvérisé. Cette crosse peut loger le récipient pressurisé.

Le réservoir de produit et le récipient pressurisé peuvent être liés fixement, sans déplacement de l'un par rapport à l'autre au cours de l'utilisation.

Le produit qui est pulvérisé peut être un liquide, une poudre, un produit cosmétique, notamment un fond de teint.

L'invention a encore pour objet, selon un autre de ses aspects, indépendamment ou en combinaison avec ce qui précède, un dispositif de pulvérisation comportant :
- un mécanisme de pulvérisation,
- un réservoir contenant un produit à pulvériser, le réservoir comportant au moins une première cloison et des premier et deuxième compartiments capables de contenir le produit, ces compartiments étant agencés pour alimenter le mécanisme de pulvérisation en produit et étant disposés de part et d'autre de cette première cloison.

L'invention a encore pour objet, indépendamment ou en combinaison avec ce qui précède, un dispositif de pulvérisation d'au moins un produit contenu dans un réservoir, notamment un produit cosmétique, le produit étant prélevé dans le réservoir grâce à une dépression créée au niveau d'un orifice de sortie du réservoir par un écoulement d'un gaz vecteur, ce gaz vecteur étant stocké dans un récipient pressurisé, ce dispositif comportant une valve de réglage du débit de produit pulvérisé et un organe de commande capable d'être manoeuvré par l'utilisateur pour agir à la fois sur une valve de distribution du gaz vecteur et sur la valve de réglage, cette dernière comportant un pointeau agencé pour coopérer avec un siège associé de manière à ce que le débit de produit pulvérisé varie avec l'écartement entre le siège et le pointeau.

Grâce à l'invention, le débit de produit peut être réglé progressivement et précisément par l'utilisateur, ce qui facilite l'obtention d'un maquillage de qualité.

Selon un exemple de mise en oeuvre de l'invention, l'organe de commande comporte un levier rotatif. Un tel levier peut être réalisé le cas échéant avec une longueur relativement grande, de manière à pouvoir être actionné par l'utilisateur sans que ce dernier ait à exercer un effort important.

La valve de distribution est de préférence solidaire du récipient pressurisé. Cela peut permettre de réduire le coût du dispositif en profitant d'une économie d'échelle grâce à l'utilisation d'une valve de distribution conventionnelle, notamment à déclenchement par basculement d'une tige de commande.

Dans une réalisation particulière, le siège est situé sur une pièce de support d'au moins une buse de pulvérisation du produit. Cette pièce de support peut être en matière plastique et le cas échéant être fixée de manière amovible sur le dispositif, ce qui peut faciliter son nettoyage ou permettre le changement de la ou des buses en fonction de la géométrie du spray souhaitée.

Toujours dans une réalisation particulière, le dispositif peut comporter deux buses de sortie du gaz vecteur et une buse de sortie du produit à pulvériser. Le dispositif peut notamment comporter deux orifices de sortie de gaz vecteur ayant des axes convergeant en éloignement du dispositif. Cela peut permettre d'obtenir un spray plus doux. L'orifice de sortie du produit peut présenter un axe situé sensiblement dans le même plan que les axes des orifices de sortie de gaz vecteur.

Chaque buse peut être métallique et notamment être réalisée par décolletage. Cela permet d'obtenir d'une façon économique, notamment sans avoir à investir dans la réalisation de moules, des buses de qualité.

Le dispositif est avantageusement portable et autonome, et comporte un logement pour recevoir le récipient pressurisé. Le dispositif peut comporter un capot mobile, par exemple articulé, permettant de fermer l'accès au logement.

Dans une réalisation particulière, le pointeau peut coulisser dans une direction sensiblement parallèle à la direction selon laquelle le produit est pulvérisé. Le dispositif peut comporter un ressort de rappel du pointeau dans une position de repos, dans laquelle il s'applique contre le siège. L'organe de commande peut ainsi être dépourvu de ressort de rappel qui lui soit propre.

Toujours dans un exemple de réalisation, le dispositif peut comporter un embout agencé pour s'engager sur une tige de commande de la valve de distribution et l'organe de commande peut être agencé pour pouvoir s'appliquer contre cet embout lorsqu'il est manoeuvré pour déclencher la pulvérisation.

Selon un autre aspect de l'invention, le dispositif peut comporter un miroir articulé.

L'organe de commande peut être positionné de diverses manières sur le dispositif.

Le dispositif peut présenter une forme générale allongée et l'organe de commande peut présenter une face d'appui pour l'utilisateur disposée sur un côté longitudinal du dispositif. Une telle disposition peut s'avérer particulièrement ergonomique.

Le dispositif peut encore présenter la forme générale d'un pistolet. L'organe de commande peut alors présenter une face d'appui pour l'utilisateur disposée sur un côté d'une crosse, ce côté étant par exemple situé à l'opposé d'un orifice d'où sort le produit qui est pulvérisé. La crosse peut loger le récipient pressurisé.

Selon un autre aspect de l'invention, le réservoir de produit et le récipient pressurisé sont liés fixement, sans déplacement de l'un par rapport à l'autre au cours de l'utilisation. Le réservoir peut comporter un micro-orifice débouchant à l'air libre ou un clapet de reprise d'air. Le réservoir peut être fixé de manière amovible sur le dispositif.

Le produit qui est pulvérisé peut être un liquide, une poudre, un produit cosmétique, notamment un fond de teint.

L'invention a encore pour objet un ensemble comportant un dispositif tel que défini plus haut et un réservoir contenant le produit à pulvériser.

L'invention pourra être mieux comprise à la lecture de la description détaillée qui va suivre, d'exemples de mise en oeuvre non limitatifs de celle-ci, à l'examen du dessin annexé, sur lequel :
- la figure 1 est une vue schématique de côté d'un exemple de dispositif de pulvérisation réalisé conformément à l'invention,
- la figure 2 est une vue du dispositif de la figure 1 avec arrachements faisant apparaître des détails de construction du mécanisme de pulvérisation,
- la figure 3 représente de manière schématique, en coupe axiale, une tête de pulvérisation pouvant équiper le dispositif de pulvérisation,
- la figure 4 représente de manière schématique, avec coupe partielle, une variante de réalisation du dispositif,
- la figure 5 est une coupe longitudinale d'un exemple de réservoir,
- la figure 6 est une coupe selon VI-VI de la figure 5,
- la figure 7 est une section transversale partielle selon VII-VII de l'embout du réservoir de la figure 5,
- la figure 8 est une coupe transversale selon VIII-VIII de la figure 6 schématique du réservoir au cours de sa mise en place sur le dispositif de pulvérisation, et
- la figure 9 est une vue analogue à la figure 8, après mise en place du réservoir.

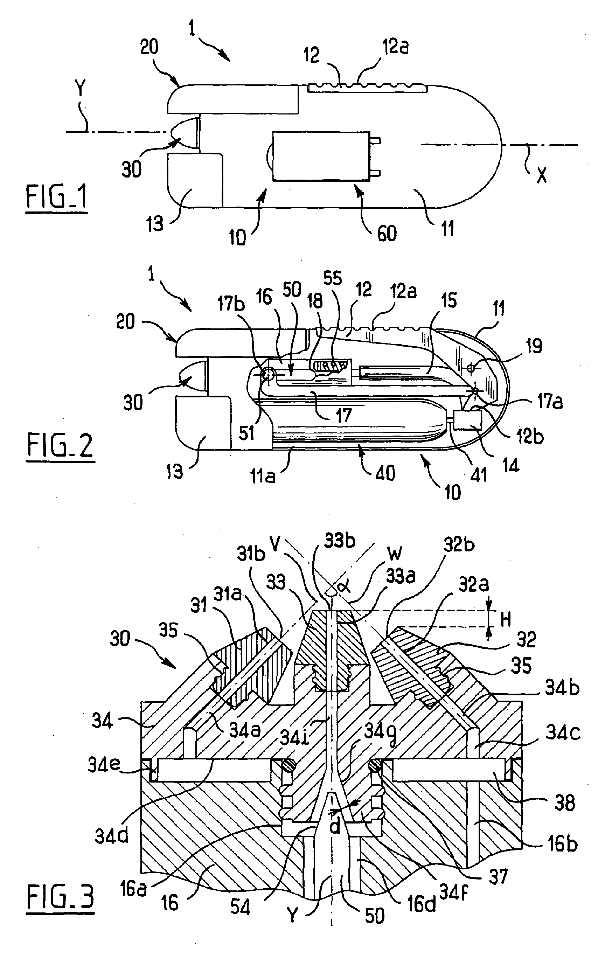

Le dispositif de pulvérisation 1, représenté aux figures 1 et 2, comporte un mécanisme de pulvérisation 10 et un réservoir amovible 20 contenant le produit à pulvériser, par exemple un fond de teint liquide.

Le mécanisme 10 comporte un boîtier 11 formé par exemple par l'assemblage de deux coques en matière plastique et un organe de commande 12 mobile permettant de déclencher la pulvérisation.

Dans l'exemple considéré, le boîtier 11 présente une forme générale allongée selon un axe longitudinal X qui est sensiblement parallèle à une direction Y selon laquelle le produit est pulvérisé par une tête de pulvérisation 30.

L'organe de commande 12 présente une face supérieure 12a sur laquelle l'utilisateur peut appuyer pour provoquer la distribution, et qui s'étend, dans l'exemple considéré, sur le côté longitudinal supérieur du mécanisme 10. Le levier 12 est articulé autour d'un pivot 19, fixe par rapport au boîtier 11. L'axe autour duquel l'organe de commande 12 pivote est par exemple orthogonal à l'axe longitudinal X, et peut couper cet axe X. L'organe de commande 12 comporte dans l'exemple illustré deux bras, le premier définissant la face supérieure 12a précitée et le deuxième une extrémité 12b dont le rôle sera précisé plus loin.

Le boîtier 11 comporte un logement 11a qui reçoit un récipient pressurisé 40 contenant un gaz vecteur, par exemple du butane, de l'isobutane ou de l'isopropane ou un composé fluoré liquéfié. Ce récipient 40 est équipé d'une valve de distribution comportant une tige de commande 41 creuse, cette tige 41 actionnant la valve lorsqu'elle est basculée.

Le récipient 40 peut être introduit à l'intérieur du boîtier 11 grâce à un capot amovible 13. La tige de commande 41 s'engage dans un embout 14 qui coopère avec l'organe de commande 12, et en particulier avec l'extrémité 12b.

L'embout 14 débouche par ailleurs dans une tubulure 15 dans laquelle s'échappe le gaz contenu dans le récipient pressurisé 40 lorsque la tige de commande 41 est basculée sous la contrainte de l'organe de commande 12.

La tubulure 15 débouche au niveau d'un ensemble de guidage 16 dans lequel peut coulisser un pointeau 50, parallèlement à un axe Y, ce dernier étant parallèle voire confondu avec l'axe longitudinal X.

Le pointeau 50 peut être entraîné en déplacement par une tringle 17 reliée à une extrémité 17a au levier 12 et à l'autre extrémité 17b à un ergot 51 solidaire du pointeau 50. L'ergot 51 coulisse dans une fente 18 de l'ensemble de guidage 16. La tête de pulvérisation 30 comporte, dans l'exemple considéré, deux buses 31 et 32 de pulvérisation de gaz vecteur et une buse 33 de pulvérisation du produit contenu dans le réservoir 20, ces buses 31 à 33 étant fixées sur une pièce de support commune 34, elle-même fixée sur l'ensemble de guidage 16.

Les buses 31 à 33 sont réalisées, dans l'exemple considéré, par décolletage d'un métal, et présentent une partie filetée 35 permettant leur montage sur la pièce de support 34 et des canaux intérieurs respectifs 31a, 32a et 33a.

Les axes V et W respectifs des orifices de sortie 31b et 32b des buses 31 et 32 se coupent en avant de la buse 33 et forment entre eux un angle α voisin de 90° dans l'exemple considéré. La distance H, mesurée entre la face avant de la buse 33 et les buses 31 et 32, est d'environ 1,7 mm dans l'exemple décrit. Le diamètre des orifices 31b et 32b de sortie du gaz vecteur est par exemple de 0,4 mm et celui de l'orifice 33b de sortie du produit de 0,9 mm.

La pièce de support 34 comporte des canaux 34a et 34b communiquant respectivement avec les canaux 31a et 32a des buses 31 et 32 à une extrémité et à l'autre extrémité avec une gorge annulaire 34c débouchant sur la face arrière 34d de la pièce de support 34. Cette dernière comporte une lèvre d'étanchéité 34e qui vient s'appliquer contre une surface de l'ensemble de guidage 16 ainsi qu'une partie filetée 34f qui vient s'engager dans un logement 16a de cet ensemble 16. La partie filetée 34f porte un joint torique d'étanchéité 37 qui vient s'appliquer de manière étanche sur la paroi du logement 16a. Une chambre annulaire 38 est formée entre la pièce de support 34 et l'ensemble de guidage 16 et le gaz vecteur est acheminé dans cette chambre annulaire par un canal 16b de l'ensemble 16, ce canal 16b communiquant avec la tubulure 15.

La pièce de support 34 définit un siège 34g de forme conique contre lequel peut s'appliquer au repos l'extrémité 54, de même forme conique, du pointeau 50. Un canal 34i d'axe Y réalisé dans la pièce de support 34 permet au produit à pulvériser de gagner le canal intérieur 33a de la buse 33 lorsque l'extrémité 54 du pointeau 50 est écartée du siège 34g.

Le pointeau 50 est rappelé contre son siège par un ressort hélicoïdal 55 travaillant en compression, logé dans l'ensemble de guidage 16, partiellement apparent sur la figure 2, venant en appui à une extrémité contre une paroi de l'ensemble 16 et à l'autre extrémité contre un épaulement du pointeau 50.

Le fonctionnement du dispositif 1 est le suivant. Lorsque l'utilisateur presse la face 12a du levier 12, ce dernier appuie par son extrémité 12b contre l'embout 14, ce qui provoque le basculement de la tige de commande 41 et l'émission de gaz vecteur. Ce dernier parcourt notamment l'embout 14, la tubulure 15, le canal 16b et les canaux 34a et 34b avant de quitter les orifices de sortie 31b et 32b des buses 31 et 32.

Le levier 12 entraîne également en déplacement la tringle 17 et le pointeau 50, dont l'extrémité 54 s'écarte du siège 34g d'une distance d qui est proportionnelle à l'angle dont tourne le levier 12. L'utilisateur peut ainsi, en appuyant plus ou moins sur le levier 12, régler le débit du produit qui est aspiré dans le réservoir 20. Le déplacement du levier 12 influe sur le débit du gaz libéré par le réservoir pressurisé 40, et ainsi sur l'importance de la dépression créée par l'écoulement de gaz vecteur au niveau de l'orifice de sortie 33b de la buse 33, ce qui permet de distribuer plus ou moins de produit sur la surface traitée.

Le dispositif 1 peut être muni, comme on le voit sur la figure 1, d'un miroir articulé 60 dont la surface réfléchissante fait face au boîtier 11 lorsque le miroir est en position rabattue, comme représenté sur la figure 1. Lors de l'utilisation, l'utilisateur peut faire pivoter d'un quart de tour le miroir 60 et s'en servir pour suivre le maquillage qui est réalisé avec le dispositif de pulvérisation 1.

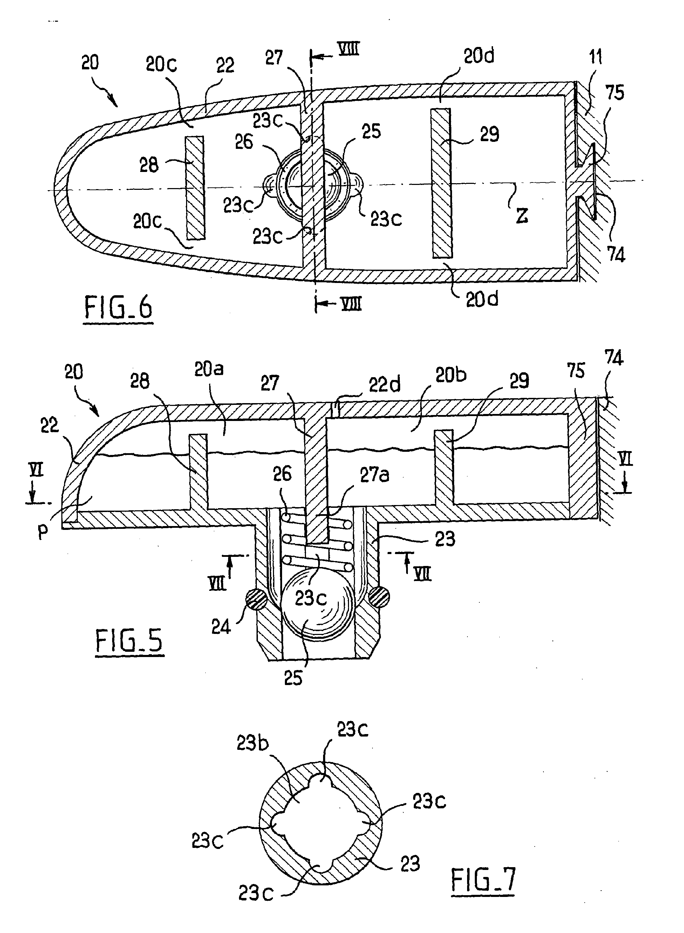

Le dispositif 1 peut être réalisé avec d'autres formes que celle illustrée aux figures 1 et 2, et notamment présenter une forme générale de pistolet, comme représenté à la figure 4.

Sur cette figure, les mêmes références ont été utilisées pour désigner des éléments identiques ou similaires à ceux déjà décrits. On voit que le récipient pressurisé 40 peut être logé dans la crosse du pistolet, la face 12a du levier 12 servant d'appui à l'utilisateur étant située du côté 11c de la crosse qui est opposé à l'orifice par lequel le produit est distribué.

L'axe longitudinal du récipient fait, avec l'axe Y, un angle d'environ 60°.

La tige de commande 41 est orientée, en l'absence de pulvérisation, comme on peut le voir sur la figure 4, en oblique et vers la droite, la pulvérisation s'effectuant vers la gauche.

Comme dans l'exemple précédent, lorsque l'utilisateur appuie sur le levier 12, la rotation de celui-ci fait basculer par appui de l'extrémité 12b contre l'embout 14 ce dernier vers la gauche, et par voie de conséquence pivoter également la tige de commande 41 engagée dans l'embout 14. La rotation du levier 12 s'accompagne également d'un déplacement de la tringle 17 qui écarte vers la droite le pointeau 50 du siège 34g.

Dans l'exemple de la figure 4, on peut remarquer que l'embout 14 est guidé en basculement par des ergots 14a engagés dans des rainures 11d du boîtier 11.

Il peut être avantageux que le réservoir 20 soit fixé de manière amovible sur le mécanisme de pulvérisation 10, de façon à permettre à l'utilisateur de le remplacer par un autre une fois le produit contenu dans celui-ci épuisé.

On va maintenant décrire plus particulièrement en référence aux figures 5 à 9 un exemple de réalisation du réservoir.

Celui-ci peut comporter, comme on le voit sur la figure 5 notamment, une partie de base 21 et un couvercle 22 rapporté sur la partie de base 21, les deux étant fixés par exemple par collage, soudage ou encliquetage.

Le couvercle 22 est de préférence réalisé dans un matériau transparent, de façon à permettre à l'utilisateur d'apprécier le niveau de remplissage et la couleur du produit P contenu à l'intérieur. Le couvercle 22 peut être traversé par un micro-orifice 22d de reprise d'air, suffisamment petit pour empêcher l'écoulement du produit P au travers.

La partie de base 21 est, dans l'exemple considéré, réalisée avec un embout saillant 23 destiné à s'engager dans un logement 70 correspondant réalisé sur le mécanisme de pulvérisation 10, ce logement 70 communiquant par un conduit 71 avec l'espace 16d dans lequel coulisse le pointeau 50.

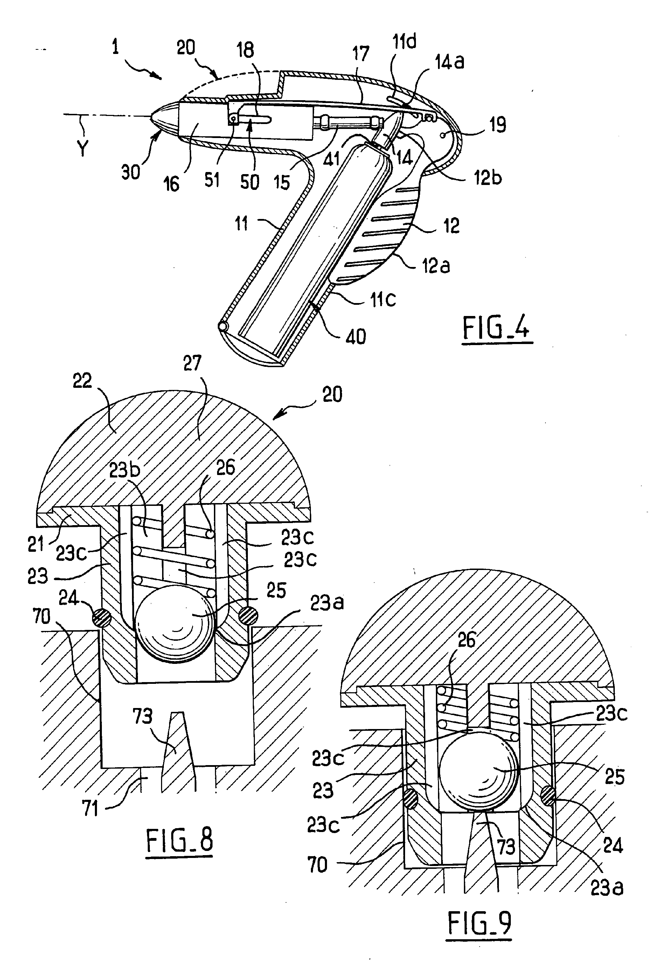

L'embout 23 porte un joint torique 24 qui permet d'éviter les fuites de produit une fois celui-ci en place dans le logement 70, comme représenté sur la figure 9.

Après avoir fermé le réservoir avant son montage sur le mécanisme 10, l'embout 23 loge intérieurement un clapet comportant une bille 25 et un ressort 26 pouvant maintenir la bille 25 plaquée contre un siège 23a correspondant réalisé sur l'embout 23, comme on peut le voir sur la figure 5.

La bille 25 peut se déplacer dans un passage 23b à l'intérieur de l'embout 23, ce passage 23b comportant à sa périphérie quatre canaux longitudinaux 23c permettant au produit contenu dans le réservoir 20 de contourner la bille 25 et de s'écouler vers le logement 70 une fois que la bille 25 a été repoussée hors de son siège 23a. Le déplacement de la bille 25 peut être provoqué par un relief 73 du mécanisme de pulvérisation 10, comme on peut le voir sur la figure 9. Lorsque le réservoir 20 est séparé du mécanisme de pulvérisation 10, la bille 25 reprend son appui contre le siège 23a et referme de manière étanche le passage 23b.

Le réservoir 20 présente une forme générale allongée selon un axe longitudinal Z qui, dans l'exemple de réalisation des figures 1 et 2, est sensiblement parallèle à l'axe longitudinal X et à la direction de pulvérisation Y. Dans l'exemple de réalisation de la figure 4, l'axe Z est sensiblement parallèle à l'axe de pulvérisation Y et forme avec l'axe longitudinal de la crosse un angle d'environ 45°.

Lorsque l'utilisateur manipule le dispositif de pulvérisation 1 pour se maquiller, l'inclinaison du réservoir 20 est susceptible de varier et, conformément à un aspect de l'invention, on réalise le réservoir 20 de manière à ce que le passage 23b soit toujours alimenté en produit P.

Dans l'exemple des figures 5 à 9, on réalise ainsi le réservoir avec des moyens permettant de freiner le déplacement du produit dans le réservoir, en l'espèce plusieurs cloisons, dont une première cloison 27 qui délimite à l'intérieur du réservoir 20 des premier 20a et deuxième 20b compartiments contenant du produit P.

Chacun de ces compartiments est lui-même délimité en deux sous-compartiments par des deuxième 28 et troisième 29 cloisons, respectivement. Ces cloisons 28 et 29 sont réalisées, dans l'exemple considéré, d'un seul tenant par moulage de matière plastique avec la partie de base 21, la première cloison 27 étant réalisée d'un seul tenant par moulage de matière avec le couvercle 22.

La première cloison 27 s'étend transversalement, comme on peut le voir sur la figure 6, sur toute la largeur du réservoir, tandis que les deuxième 28 et troisième 29 cloisons ménagent avec le couvercle 22 des passages respectifs 20c et 20d, permettant au produit de circuler de part et d'autre desdites cloisons dans les compartiments 20a et 20b lorsque l'inclinaison du réservoir 20, autour d'un axe horizontal perpendiculaire à l'axe Z, change.

Les cloisons 28 et 29 freinent ainsi l'écoulement du produit P sans l'empêcher de gagner le passage 23b.

La première cloison 27 se prolonge, à l'intérieur de l'embout 23, pour former un guide 27a pour le ressort 26, comme on peut le voir sur la figure 5. La première cloison 27 est configurée de telle sorte que les deux compartiments 20a et 20b peuvent se vider indépendamment l'un de l'autre. Elle peut ne pas comporter d'ajours. Les deux compartiments peuvent ne pas communiquer autrement que par l'intermédiaire du passage 23b. Les deux compartiments 20a et 20b peuvent s'étendre essentiellement chacun de part et d'autre d'un plan contenant un axe longitudinal du passage 23b.

Dans le mode de réalisation illustré, l'un des compartiments 20a, 20b peut se vider sans que l'autre ne se vide.

Le réservoir 20 peut être retenu sur le mécanisme de pulvérisation 10 par le seul frottement créé par l'application du joint torique 24 contre la paroi du logement 70. De préférence, des moyens de fixation supplémentaires sont prévus, lesquels peuvent comporter par exemple une liaison à complémentarités de formes comportant par exemple une rainure 74 dans laquelle peut s'engager une nervure 75 en forme de queue d'aronde. Les rainure 74 et nervure 75 peuvent avoir leur axe longitudinal orienté parallèlement à celui de l'embout 23, la rainure 74 étant formée par exemple sur le boîtier 11.

Bien entendu, l'invention n'est pas limitée aux exemples qui viennent d'être décrits.

En particulier, on peut donner au dispositif de pulvérisation 1 d'autres formes encore, notamment en fonction de la taille du récipient pressurisé 40 et de la forme du réservoir 20 contenant le produit à pulvériser.

Le cas échéant, le dispositif de pulvérisation 1 peut être agencé pour recevoir plusieurs réservoirs contenant des produits à pulvériser différents et comporter un sélecteur permettant de mettre sélectivement en communication l'un des réservoirs avec le mécanisme de pulvérisation, de façon à pulvériser l'un des produits au choix de l'utilisateur. Les réservoirs peuvent dans ce cas comporter, par exemple, des fonds de teint ayant des couleurs différentes.

De préférence, le récipient pressurisé contient un gaz vecteur sous forme liquéfiée. Toutefois, on ne sort pas du cadre de la présente invention lorsque le récipient pressurisé comporte de l'air comprimé par exemple, étant agencé pour pouvoir être rechargé périodiquement grâce à un petit compresseur.

Dans les exemples qui viennent d'être décrits, la tête de pulvérisation 30 comporte plusieurs buses, mais on ne sort pas du cadre de la présente invention lorsque l'émission du gaz vecteur se fait par une seule buse.

Dans toute la description, y compris les revendications, l'expression « comportant un » doit être comprise comme étant synonyme de « comportant au moins un », sauf si le contraire est spécifié.

## Revendications

1. Dispositif de pulvérisation comportant :
- un mécanisme de pulvérisation,
- un réservoir (20) contenant un produit cosmétique à pulvériser, agencé de manière à pouvoir se fixer de façon amovible sur le dispositif de manière à ce que le produit puisse être sélectivement distribué au moyen du mécanisme de pulvérisation, ce réservoir comportant :
- un passage (23b) de sortie du produit, et
- un obturateur (25) pour obturer ce passage lorsque le réservoir n'est pas monté sur le dispositif,
le mécanisme et l'obturateur étant agencés de telle sorte que l'obturateur s'ouvre en réponse au montage du réservoir sur le dispositif, le réservoir comportant en outre au moins une première cloison (27) et des premier (20a) et deuxième (20b) compartiments capables de contenir le produit, ces compartiments étant agencés pour alimenter le mécanisme de pulvérisation en produit et étant disposés de part et d'autre de cette première cloison.

2. Dispositif selon la revendication 1, **caractérisé par le fait que** le passage (23b) débouche à une extrémité de part et d'autre de la première cloison (27).

3. Dispositif selon l'une des deux revendications précédentes, **caractérisé par le fait que** l'obturateur comporte un clapet à bille (25).

4. Dispositif selon la revendication précédente, **caractérisé par le fait que** le mécanisme de pulvérisation comporte un relief (73) agencé pour déplacer la bille (25) d'une position d'obturation à une position ouvrant le passage (23b) lorsque le réservoir est mis en place.

5. Dispositif selon l'une quelconque des revendications précédentes, **caractérisé par le fait que** le réservoir comporte au moins une deuxième cloison (28) d'un côté de la première, associée au premier compartiment (20a) et délimitant dans celui-ci deux sous-compartiments communiquant l'un avec l'autre.

6. Dispositif selon la revendication précédente, **caractérisé par le fait que** le réservoir comporte au moins une troisième cloison (29) associée au deuxième compartiment (20b) et délimitant dans celui-ci deux sous-compartiments, la première cloison (27) se situant entre les deuxième (28) et troisième (29) cloisons.

7. Dispositif selon l'une quelconque des revendications précédentes, **caractérisé par le fait que** le réservoir comporte une partie de base (21) et une partie formant couvercle (22), rapportée sur la partie de base.

8. Dispositif selon les revendications 6 et 7, **caractérisé par le fait que** les deuxième (28) et troisième (29) cloisons sont réalisées d'un seul tenant avec l'une au moins de la partie de base et de la partie formant couvercle.

9. Dispositif selon l'une quelconque des revendications précédentes, **caractérisé par le fait que** le passage (23b) est délimité au moins partiellement par un embout (23).

10. Dispositif selon la revendication précédente, **caractérisé par le fait que** l'embout (23) est saillant.

11. Dispositif selon l'une des revendications 9 et 10, **caractérisé par le fait que** l'embout porte un joint torique d'étanchéité (24).

12. Dispositif selon l'une quelconque des revendications précédentes, **caractérisé par le fait que** le réservoir est au moins partiellement transparent.

13. Dispositif selon l'une quelconque des revendications précédentes, **caractérisé par le fait que** le réservoir (20) comporte une partie de fixation (75) agencée pour coopérer par complémentarités de formes avec le mécanisme de pulvérisation.

14. Dispositif selon l'une quelconque des revendications précédentes, **caractérisé par le fait que** le produit est pulvérisé grâce à une dépression créée par un écoulement de gaz vecteur.

15. Dispositif selon l'une quelconque des revendications précédentes, **caractérisé par le fait que** le gaz vecteur est stocké sous une forme liquéfiée dans un récipient pressurisé (40).

16. Dispositif selon l'une quelconque des revendications précédentes, **caractérisé par le fait que** le mécanisme de pulvérisation comporte un organe de commande (12) agencé de manière à agir simultanément à la fois sur une valve de distribution de gaz vecteur et sur une valve de réglage du débit du produit pulvérisé.

17. Dispositif selon l'une quelconque des revendications précédentes, **caractérisé par le fait que** le réservoir présente une forme générale allongée, d'axe longitudinal (Z) sensiblement parallèle à la direction (Y) selon laquelle s'effectue la pulvérisation.

18. Dispositif selon la revendication 9, **caractérisé par le fait que** la première cloison (27) se prolonge à l'intérieur de l'embout (23).

19. Dispositif selon l'une quelconque des revendications précédentes, **caractérisé par le fait que** les deux compartiments ne communiquent pas autrement que par l'intermédiaire du passage (23b).

20. Dispositif de pulvérisation comportant :
- un mécanisme de pulvérisation comportant un logement pour recevoir une réserve de gaz vecteur,
- un réservoir (20) contenant un produit à pulvériser, agencé de manière à pouvoir se fixer de façon amovible sur le dispositif de manière à ce que le produit puisse être sélectivement distribué au moyen du mécanisme de pulvérisation, ce réservoir comportant :
- un passage (23b) de sortie du produit, et
- un obturateur (25) pour obturer ce passage lorsque le réservoir n'est pas monté sur le dispositif,
le mécanisme et l'obturateur étant agencés de telle sorte que l'obturateur s'ouvre en réponse au montage du réservoir sur le dispositif.

21. Dispositif de pulvérisation (1) d'au moins un produit (P) cosmétique, contenu dans un réservoir (20), le produit étant prélevé dans le réservoir grâce à une dépression créée au niveau d'un orifice de sortie du réservoir par un écoulement d'un gaz vecteur, ce gaz vecteur étant stocké dans un récipient pressurisé (40), ce dispositif comportant une valve de réglage du débit de produit pulvérisé et un organe de commande (12) capable d'être manoeuvré par l'utilisateur pour agir à la fois sur une valve de distribution du gaz vecteur et sur la valve de réglage, cette dernière comportant un pointeau (50) agencé pour coopérer avec un siège associé (34g) de manière à ce que le débit de produit pulvérisé varie avec l'écartement entre le siège et le pointeau.
